# EUROPÄISCHE PATENTANMELDUNG

(11) **EP 1 203 972 A2**
(43) Veröffentlichungstag der Anmeldung: **08.05.2002**
(21) Anmeldenummer: 01124491.0
(22) Anmeldetag: 12.10.2001
(51) Int. Cl.: G02B 6/42, G02B 26/02, G02B 26/08

(54) **Kreuzkoppler für die optische Nachrichtentechnik**

(30) Priorität: 27.10.2000 DE 10053498
(71) Anmelder: Carl Zeiss, 89518 Heidenheim (Brenz) (DE); Carl-Zeiss-Stiftung, trading as Carl Zeiss, 89518 Heidenheim (Brenz) (DE)
(72) Erfinder: Weidlich, Kai, 73432 Aalen (DE)

(57) **Zusammenfassung**

Die vorliegende Erfindung betrifft einen Kreuzkoppler für die optische Nachrichtentechnik zur wellenlängenselektiven Kopplung einer Vielzahl optischer Eingangskanäle mit einer Vielzahl von optischen Ausgangskanälen. Der erfindungsgemäße Kreuzkoppler weist ein Spektrometer und ein Spiegelraster auf. Jedem optischen Eingangskanal ist eine Anzahl an Spiegelelementen des Spiegelarrays (30) zugeordnet, die der Anzahl der simultan auf einem optischen Eingangskanal übertragbaren, wellenlängenmäßig selektierten Nachrichtenkanäle entspricht. Entsprechend ist jedem optischen Ausgangskanal eine Anzahl an Spiegelelementen zugeordnet, die der Anzahl der wellenlängenmäßig getrennt simultan pro optischem Ausgangskanal simultan übertragbaren Nachrichtenkanäle entspricht.

## Beschreibung

Die Erfindung betrifft einen Kreuzkoppler für die optische Nachrichtentechnik zur wellenlängenselektiven Kopplung einer Vielzahl optischer Eingangskanäle mit einer Vielzahl optischer Ausgangskanäle.

In der optischen Nachrichtentechnik besteht das Problem, daß eine Vielzahl optischer Eingangskanäle, die üblicherweise in Form einer Vielzahl an Glasfasern realisiert sind, mit einer Vielzahl von optischen Ausgangskanälen, die ebenfalls als Vielzahl von Glasfasern realisiert sind, miteinander selektiv und wahlweise zu koppeln sind. Als erschwerend kommt dabei hinzu, daß auf jedem der optischen Eingangs- und Ausgangskanäle durch die Ausnutzung entsprechender Frequenzbänder wieder eine Vielzahl, größenordnungsmäßig derzeit ca. 100, Nachrichtenkanäle realisiert sind. Es besteht deshalb die Notwendigkeit, die Kopplung eines jeden einzelnen optischen Eingangskanales mit jedem beliebigen optischen Ausgangskanal auch noch wellenlängenselektiv zu gestalten, so daß jeder beliebige eingehende Nachrichtenkanal mit jedem beliebigen ausgehenden Nachrichtenkanal koppelbar ist.

Dieses Problem wird erfindungsgemäß mit einem Kreuzkoppler mit den Merkmalen des Anspruches 1 gelöst. Vorteilhafte Ausgestaltungen der Erfindung ergeben sich aus den Merkmalen der abhängigen Ansprüche.

Der erfindungsgemäße Kreuzkoppler weist ein Spektrometer und ein Spiegelraster auf. Vorzugsweise ist zusätzlich ein Spiegel im Strahlengang hinter dem Spiegelraster vorgesehen.

Beim erfindungsgemäßen Kreuzkoppler ist für jedem Nachrichtenkanal ein separates Spiegelelement des Spiegelrasters zugeordnet. Soweit keine Spiegelraster mit hinreichend vielen separat ansteuerbaren Spiegelelementen verfügbar sind, können auch mehrere Spiegelraster parallel zueinander angeordnet vorgesehen sein. Insbesondere ist es dabei denkbar, daß die Anzahl der Spiegelraster der Anzahl der wellenlängenmäßig je einzelnem optischen Ein- und Ausgangskanal realisierten Nachrichtenkanäle entspricht. Die Anzahl der Spiegelelemente jedes Spiegelrasters entspricht dann der Summe der Anzahl der optisch separat realisierten Eingangskanäle und Ausgangskanäle.

Bei einem vorteilhaften Ausführungsbeispiel durchläuft das aus einem Eingangskanal austretende Licht das Teilsystem aus Spektrometer und Spiegelarray vor Einfall auf den Spiegel ein erstes Mal und nach Reflexion am Spiegel ein zweites Mal. Beim zweiten Einfall auf das Spiegelarray fällt der Strahl dabei auf ein anderes Spiegelelement des Spiegelarrays, das dem gewünschten optischen Ausgangskanal zugeordnet ist, so daß nach dem zweiten Durchlauf durch das Spektrometer das Licht auf den gewünschten Austrittskanal einfällt.

Nachfolgend werden Einzelheiten der Erfindung anhand der in den Figuren dargestellten Ausführungsbeispiele näher beschrieben. Dabei zeigen:
- Figur 1: einen Schnitt durch einen erfindungsgemäßen Kreuzkoppler in einer die dispersive Richtung des Spektrometers enthaltenden Ebene,
- Figur 2: einen Schnitt durch den erfindungsgemäßen Kreuzkoppler in einer zur Figur 1 senkrechten Schnittebene,
- Figur 3: eine alternative Ausführungsform eines erfindungsgemäßen Kreuzkopplers im Schnitt, und
- Figur 4: eine weiter alternative Ausführungsform für einen Kreuzkoppler

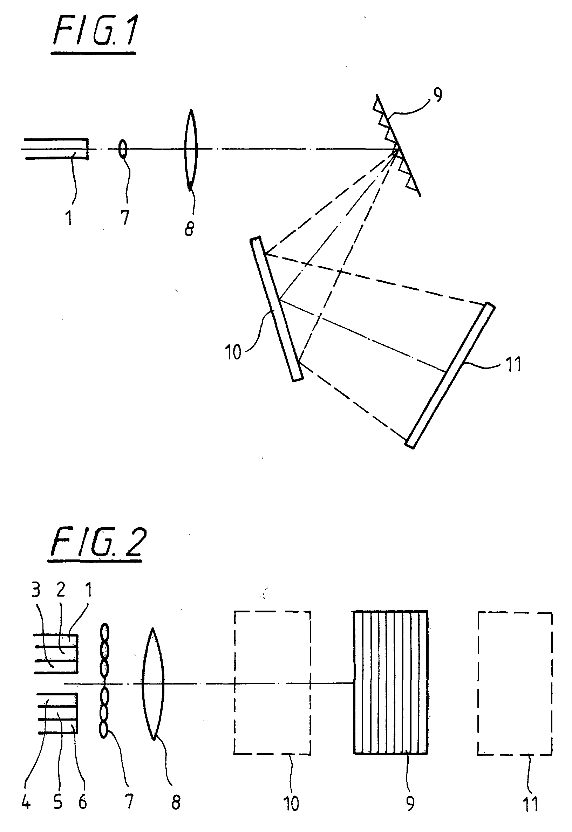

Der in den Figuren 1 und 2 dargestellte Kreuzkoppler dient zur selektiven Kopplung einer Vielzahl optischer Eingangskanäle (1 - 3) mit einer Vielzahl optischer Ausgangskanäle (4 - 6). Von den optischen Ein- und Ausgangskanälen sind in der Figur 2 jeweils nur drei aus Übersichtlichkeitsgründen dargestellt, wohingegen bei einem praktischen Ausführungsbeispiel die Anzahl der Ein- und Ausgangskanäle jeweils mindestens 10000, vorzugsweise sogar über 1 Mio. beträgt.

Der Kreuzkoppler kann zunächst den Ein- und Ausgangskanälen unmittelbar vorgeschaltet ein Linsenarray (7) aufweisen, das für jeden Ein- und Ausgangskanal (1 - 6) jeweils eine einzelne Linse aufweist. Jede einzelne Linse des Linsenarrays (7) dient gemeinsam mit einer Optik (8) dazu, daß die Apertur des aus dem zugeordneten optischen Eingangskanal an die Flächengröße des zugeordneten Spiegelelementes des nachfolgend noch näher beschriebenen Spiegelarrays (10) angepaßt ist und das zum zu verkoppelnden optischen Ausgangskanal zurückgelenkte Licht an die Apertur des optischen Ausgangskanals ebenfalls angepaßt ist.

Auf das Linsenarray (7) folgt eine Optik (8), deren Durchmesser so gewählt ist, daß der Durchmesser dieser Optik (8) den Durchmesser des Linsenarrays (7) überdeckt.

Auf die Abbildungsoptik (8) folgt ein Spektrometer (9), das zur wellenlängenselektiven Aufspaltung des einfallenden Lichtes dient. Auf das Spektrometer (9) folgt in Strahlrichtung gesehen ein Spiegelarray (10), das eine Vielzahl voneinander unabhängig schaltbarer Einzelspiegel aufweist. Entsprechende Spiegelarrays sind beispielsweise als sogenannte "micro mirror devices" bei der Firma Texas Instruments erhältlich. Die Anzahl der Einzelspiegel dieses Spiegelarrays (10) entspricht dabei der Anzahl der miteinander zu verkoppelnden Nachrichtenkanäle. Sind beispielsweise 100 optische Eingangskanäle mit 100 optischen Ausgangskanälen zu verkoppeln, und weist jeder optische Ein- und Ausgangskanal 10 wellenlängenmäßig getrennte Übertragungskanäle auf, so enthält das Spiegelarray (10) 100 x 100 x 10 einzelne Spiegelelemente. Jedem Eingangskanal und jedem Ausgangskanal ist dementsprechend eine Anzahl an Einzelspiegeln des Spiegelarrays (10) zugeordnet, die der Anzahl der wellenlängenmäßig getrennten Übertragungskanäle jedes optischen Ein- und Ausgangskanales entspricht.

In Lichtrichtung gesehen folgt auf das Spiegelarray (10) ein großflächiger Spiegel (11), an dem das vom Spiegelarray (10) abgelenkte Licht wieder auf das Spiegelarray (10) zurückreflektiert wird, so daß nachfolgend das am Spiegel (11) zurückreflektierte Licht die Anordnung aus Spiegelarray (10), Spektrometer (9) und Optik (8) ein zweites Mal durchläuft.

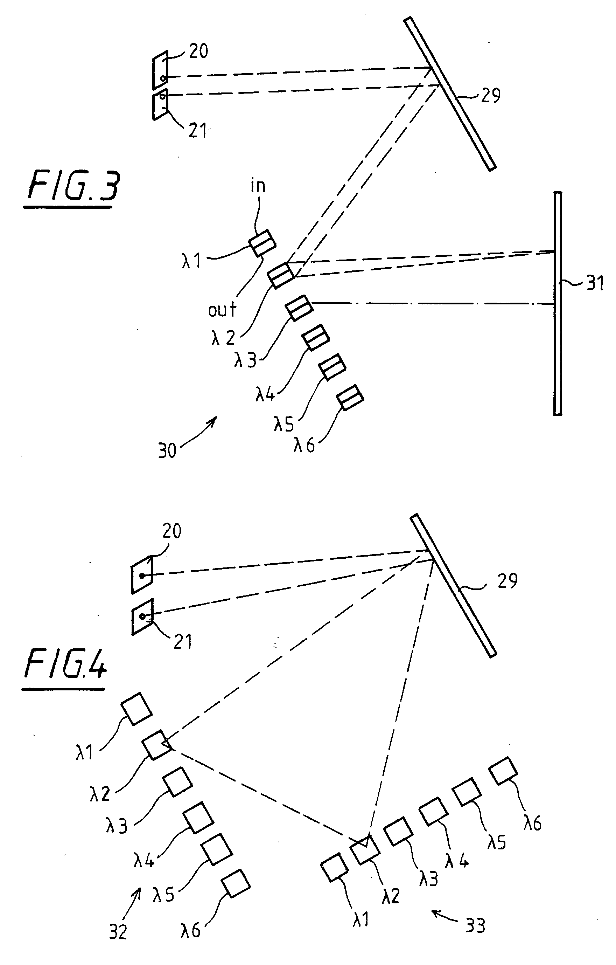

Die Funktionsweise des erfindungsgemäßen Kreuzkopplers läßt sich am einfachsten anhand der schematischen Darstellung in Figur 3 erläutern. Ein Eingangsterminal (20) mit einer Vielzahl optischer Eingangskanäle, die in der Figur 3 nicht einzeln dargestellt sind, sind mit einer Vielzahl optischer Ausgangskanäle eines Ausgangsterminals (21) zu verkoppeln. Hinter dem Gitter (29) ist für jeden wellenlängenmäßig separierten Übertragungskanal, also für jedes einen eigenen Nachrichtenkanal darstellende Wellenlängenband, ein eigenes Spiegelarray λ₁ - λ₆ vorgesehen, die jeweils eine Anzahl an individuell ansteuerbaren Einzelspiegeln aufweisen, die gerade der Anzahl aus der Summe der optischen Eingangskanäle des Eingangsterminal (20) und der optischen Ausgangskanäle des Ausgangsterminals (21) entspricht. Alternativ dazu kann natürlich auch ein einziges Mikrospiegelarray (30) vorgesehen sein, dessen Anzahl an individuell ansteuerbaren Einzelspiegeln gerade dem Produkt aus der Anzahl der wellenlängenmäßig getrennten Nachrichtenkanäle pro optischem Ein- und Ausgangskanal einerseits und der Summe der optischen Eingangskanäle und der optischen Ausgangskanäle andererseits entspricht. Jedem optischen Eingangskanal des Eingangsterminals (20) ist dementsprechend für jedes einen Nachrichtenkanal darstellende Wellenlängenband ein separates Spiegelelement des Spiegelarrays (30) zugeordnet. Entsprechend ist auch jedem optischen Ausgangskanal des Ausgangsterminals (21) für jedes einen Nachrichtenkanal darstellende Wellenlängenband jeweils ein separates Spiegelelement des Spiegelarrays (30) zugeordnet. Diese Zuordnung ist fest vorgegeben und gespeichert und wird bei der Kippung der einzelnen Spiegelelemente je nach dem, welche der optischen Übertragungskanäle für welches Wellenlängenband miteinander zu verkoppeln sind, wie folgt berücksichtigt: Angenommen ein auf einer speziellen Glasfaser, also einem speziellen optischen Eingangskanal des Eingangsterminals (20) bei einer Wellenlänge λ₂ einkommendes Signal sei mit einem speziellen optischen Ausgangskanal des Ausgangsterminals (21) zu verkoppeln. Durch die dispersive Wirkung des Gitters (29) ist sichergestellt, daß das zu verkoppelnde Signal auf den der Wellenlänge λ₂ und dem betreffenden optischen Eingangskanal zugeordnete Spiegelelement des Spiegelarrays (30) einfällt. Der Kippwinkel dieses Spiegelelementes wird nun so eingestellt, daß nach Reflexion an diesem Spiegelelement und nachfolgender Reflexion am Spiegel (31) das zu übertragende Signal auf den der selben Wellenlänge, aber dem zu verkoppelnden optischen Ausgangskanal zugeordnete Spiegelelement einfällt. Dieses dem optischen Ausgangskanal zugeordnete Spiegelelement wird nun derart verkippt, daß er das zu verkoppelnde Signal über das Spektrometer (29) auf den gewünschten optischen Ausgangskanal des Ausgangsterminals (21) zurücklenkt. Die Auslenkung der einzelnen Spiegelelemente ist damit sowohl von der Wellenlänge des zu übertragenden Signales als auch von den miteinander zu verkoppelnden optischen Ein- und Ausgangskanälen abhängig.

Alternativ zur Verwendung eines Spiegels (31) wäre es auch denkbar, einen im wesentlichen am Spiegel (31) gespiegelten Strahlengang vorzusehen, d.h. die optischen Eingangskanäle (20) und die optischen Ausgangskanäle (21) im wesentlichen gegenüberliegend anzuordnen und die Spiegelelemente des Spiegelarrays (30) in zwei Spiegelarrays aufzuteilen. Ein derartiges System würde jedoch ein zweites Gitter (29) benötigen und zusätzlich deutlich weniger kompakt bauen.

Eine weitere alternative Ausführungsform ist in der Figur 4 dargestellt. Im Unterschied zur Ausführungsform in Figur 3 sind hier zwei Spiegelarrays (32, 33) vorgesehen, von denen eines den Eingangskanälen des Eingangsterminals (20) und das zweite den Ausgangskanälen des Ausgangsterminals (21) zugeordnet ist. Jedes der beiden Spiegelarrays (32, 33) weist genau halb so viele individuell einstellbare Spiegelelemente auf wie das Spiegelarray (30) in Figur 3. Das von einem optischen Eingangskanal einfallende Licht wird bei dieser getrennten Anordnung der beiden Spiegelarrays unmittelbar von dem dem jeweiligen Eingangskanal zugeordneten Spiegelelement des ersten Spiegelarrays (31) auf das dem Ausgangskanal, mit dem die Verkopplung herzustellen ist, zugeordnete Spiegelelement des zweiten Spiegelarrays (32) reflektiert und von diesem unmittelbar, also ohne Zwischenschaltung eines weiteren Spiegels, über das Spekrometer (29) zu dem betreffenden Ausgangskanal gelenkt.

Bei allen beschriebenen Ausführungsformen kann das Spekrometer als Beugungsgitter ausgebildet sein.

## Patentansprüche

1. Kreuzkoppler für die optische Nachrichtentechnik zur wellenlängenselektiven Kopplung einer Vielzahl optischer Eingangskanäle (1, 2, 3) mit einer Vielzahl optischer Ausgangskanäle (4, 5, 6), wobei der Kreuzkoppler ein Spektrometer (9) und ein Spiegelraster (10) aufweist.

2. Kreuzkoppler nach Anspruch 1, wobei zusätzlich ein Spiegel (11, 31) vorgesehen ist.

3. Kreuzkoppler nach Anspruch 1 oder 2, wobei mehrere Spiegelraster vorgesehen sind.

4. Kreuzkoppler nach Anspruch 3, wobei die Anzahl der Spiegelraster der Anzahl der wellenlängenmäßig je jedem optischen Ein- und Ausgangskanal realisierten Nachrichtenkanäle entspricht.

5. Kreuzkoppler nach einem der Ansprüche 1 - 4, wobei die Anzahl der Spiegelelemente des Spiegelrasters (10) der Anzahl der wellenlängenmäßig je jedem optischen Ein- und Ausgangskanal realisierten Nachrichtenkanäle multipliziert mit der Summe aus optischen Eingangskanälen und optischen Ausgangskanälen entspricht.

6. Kreuzkoppler nach einem der Ansprüche 2 - 5, wobei das Teilsystem aus Spektrometer und Spiegelarray vor dem Einfall auf den Spiegel (11) ein erstes Mal und nach Reflexion am Spiegel (11) ein zweites Mal durchlaufen wird.

7. Kreuzkoppler nach einem der Ansprüche 1 - 6, wobei ein Linsenarray (7) vorgesehen ist.

8. Kreuzkoppler nach Anspruch 7, wobei die Anzahl der Einzellinsen des Linsenarrays (7) der Summe aus der Anzahl der miteinander zu verkoppelnden Eingangskanäle (1 - 3) und Ausgangskanäle (4 - 6) entspricht.
